# EUROPEAN PATENT SPECIFICATION

(11) **EP 2 201 920 B1**
(45) Date of publication and mention of the grant of the patent: **13.07.2011**
(21) Application number: 08172899.0
(22) Date of filing: 24.12.2008
(51) Int. Cl.: A61G 3/08, B60N 2/01, B60N 2/24, B62D 47/02

(54) **Transportation vehicle provided with access means for persons with reduced mobility**
Transportfahrzeug mit Zugangsvorrichtung für Personen mit eingeschränkter Mobilität
Véhicule de transport équipé d'un dispositif d'accès pour personnes à mobilité réduite

(43) Date of publication of application: 30.06.2010
(73) Proprietor: Iveco France S.A., 69200 Vénissieux (FR)
(72) Inventor: Faurite, Cyril, 07790, Saint Albam d'Ay (FR); Corcoral, Yves, 07100, Annonay (FR)
(74) Representative: Borsano, Corrado

(56) References cited:
- EP-A- 1 859 996
- US-A- 4 103 934
- US-A- 5 678 883
- US-A1- 2004 005 203

## Description

The present invention concerns a transportation vehicle provided with access means for persons with reduced mobility, using wheelchairs.

The invention targets all types of transportation vehicles, the journey of which includes at least one stop at a station, during which people are likely to get on or off of this vehicle. In other words, this type of transportation vehicle can thus be a bus or a coach.

The term "persons with reduced mobility" refers in particular to people moving by using a wheelchair. This term can also refer to a person accompanied by a child installed in a stroller.

In urban or extra-urban areas, it is known to provide for the circulation of transportation vehicles, such as buses or coaches, provided with access means for people with reduced mobility. This type of vehicle comprises a plurality of benches arranged on both sides of an interior center aisle. The vehicle also comprises a first access door arranged at the front as well as a second access door described as central. This second door generally serves as emergency door. These doors are arranged on the right side of the vehicle when one considers that it advances in the forward direction, with the driver on the left. The benches, arranged opposite the second access door relative to the central aisle, are benches with seats able to be raised so as to free up a space serving as a platform to receive a person with reduced mobility. A lifting device, defining a wheelchair or stroller access ramp, is placed adjacent to the access stairs arranged at the central door.

However, the presence of access stairs creates a loss of available seats for passengers. Indeed, the existence of access stairs prevents the installation of benches at that location. Establishing an optimal number of benches in the transportation vehicle is thus not possible.

US 5,678,883 discloses a bus with a rear door adapted to receive a person with reduced mobility and two benches retractable for clearing a placement zone for the accommodation of a wheelchair according to the preamble of claim 1. The placement zone is exclusively adjacent to the rear door.

The aim of the present invention is to provide a transportation vehicle able to receive a significant number of passengers, while also being adapted to transport at least one person with reduced mobility.

To this end, the invention has as its subject matter a transportation vehicle, according to claim 1.

Thanks to the transport vehicle according to the invention, at least one person with reduced mobility can be received in the vehicle without, however, excessively damaging the overall reception capacity of the vehicle.

Other advantageous characteristics of the transportation vehicle according to the invention, taken alone or according to all technically possible combinations are disclosed in the dependent claims
- the first door, the second door and the first placement zone are arranged on the same side of the vehicle in reference to the interior central aisle;
- the first placement zone receives at least one bench, adapted to tilt between a first configuration, in which the bench is in position to receive an able-bodied person, and a second configuration in which the bench is in the so-called retracted position, such that the first person with reduced mobility can be placed in the first placement zone;
- the first placement zone has a first area between 0.9 m² and 1.6 m², preferably between 1.2 m² and 1.4 m²;
- the vehicle comprises a lifting device, arranged adjacent to the first access door and adapted to place the first person with reduced mobility in the first placement zone;
- the lifting device is adapted to have a retracted position, in which it is fitted under the first placement zone;
- the vehicle comprises a second placement zone, adapted to receive a second person with reduced mobility and arranged substantially symmetrically to the first placement zone relative to the central aisle;
- the second placement zone has an area between 0.9 m² and 1.6 m², preferably between 1.2 m² and 1.4 m²;
- the vehicle also comprises a frame mounted on a front axle and a rear axle, each of the axles respectively supporting two front wheels and two rear wheels and being arranged between the first and the second access doors,
- the first and/or the second placement zone(s) comprise a device for maintaining the seat for the first and/or the second person with reduced mobility;
- the maintenance device comprises inertia reel seat belts;
- the second access door has a width between 800 mm and 1,100 mm, preferably between 900 mm and 1,000 mm, such that this door is adapted to serve as an emergency door;
- the vehicle comprises only two access doors;
- the interior central aisle is located at a so-called floor height, the vehicle being in the in-use position, between 300 mm and 2,000 mm, preferably between 400 mm and 1,700 mm.

The invention will be better understood upon reading the following description, provided solely as a non-limiting example and done in reference to the drawings in which:
- figure 1 is a side view of a transportation vehicle according to the present invention;
- figure 2 is a cross-section of the transportation vehicle along the plane II illustrated in figure 1, an access ramp being in the in-use phase;
- figure 3 is a view of the inside of the transportation vehicle, illustrating a first configuration in which a wheelchair is not arranged in the vehicle and a second configuration in which the wheelchair is placed on a placement zone;
- figure 4 is a top view of one part of the inside of the transportation vehicle according to a second embodiment of the invention.

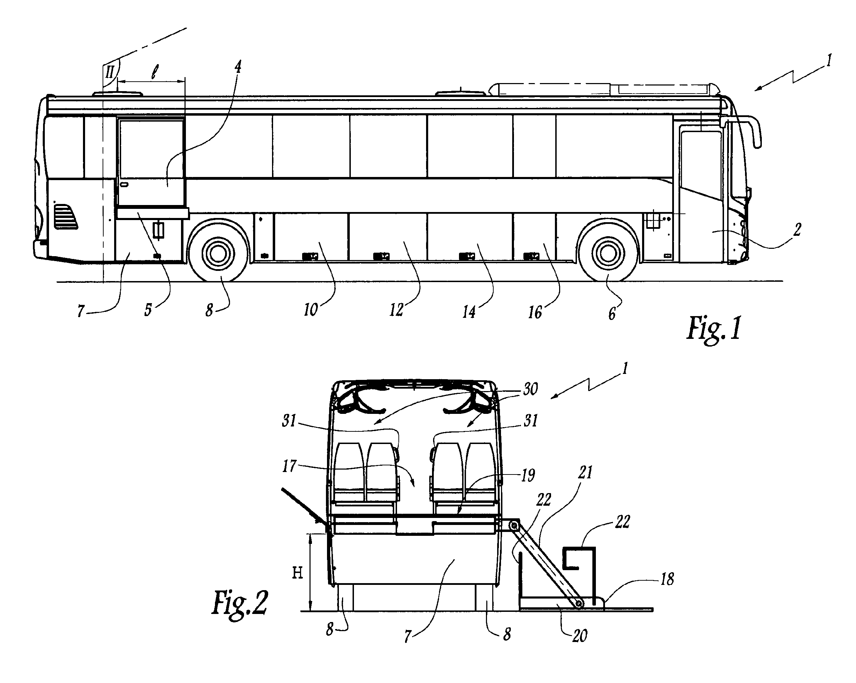

Figure 1 illustrates a transportation vehicle 1 comprising a front access door 2, arranged at the front of the vehicle at the cabin reserved for the driver, and a rear access door 4 arranged at the rear of the vehicle. A transportation vehicle of this type also comprises a frame mounted on a front axle and a rear axle each supporting two front wheels 6 and two rear wheels 8. One will note that no access door has been placed at the central part of the vehicle 1, i.e. between the play of the front wheels 6 and rear wheels 8 of the vehicle. In other words, the rear access door 4 is arranged between the rear wheels 8 and the rear end of the vehicle 1.

The transportation vehicle 1 also comprises four hold doors 10, 12, 14 and 16 arranged between the wheelhouse 6 and 8. These hold doors, of different sizes, allow access to the central hold of the vehicle. One can also provide for the presence of such hold doors on the side of the transportation vehicle not illustrated. The absence of a central access door, which can be provided in a vehicle of the prior art, allows one to free oneself from the presence of access stairs to the vehicle realized in the hold. Thus, the overall volume of the hold is increased.

At the rear access door 4, a case 5 is arranged at the floor height of an interior aisle 17 of the vehicle 1. The case is fitted under a raising floor 19. This floor 19 in particular allows passengers in the seated position to place their feet. The case 5 enables the reception of a raising device, such as an access elevator, corresponding to an access ramp 18, illustrated in figure 2. The case 5 is closed using a shutter adapted to allow the mechanism of the access ramp 18 to come out.

Moreover, the case 5 is arranged on a compartment 7 which can be designed to house an engine or to install an additional hold. It should be noted that this housing can also remain empty. This compartment is closed using a cover plate acting as a door.

The interior aisle 17 is defined at a so-called floor height H. When the vehicle 1 is in the nominal in-use configuration, the height H corresponds to the distance between the aisle and the road. Advantageously, this height H is between 300 mm and 2,000 mm, preferably between 400 mm and 1,700 mm.

In figure 2, the access ramp 18 is in a so-called receiving configuration. Indeed, a person with reduced mobility can place his wheelchair or stroller on a base 20 of the ramp 18. The access ramp 18 is deployed, so as to bear against the curb or the sidewalk across from the stopped transportation vehicle 1. Traditionally, this deployment is done using an arm 21 connecting the base 20 to one end of the case 5. Moreover, the access ramp 18 comprises safety railings 22, in order to prevent any fall of persons with reduced mobility. Preferably, the railings 22 are adapted to retract on the base 20 so as to optimize the bulk of the ramp 18. Its housing in the case 5 is thus facilitated.

On both sides of the aisle 17, two rows of benches 30 extend. The benches each comprise two seats. It can also be provided that at least some benches are made in a single piece. It should be noted that in figure 2, only the benches arranged at the access ramp 18 are visible. These benches comprise a handle 31 arranged on the upper part of the bench adjacent to the aisle 17.

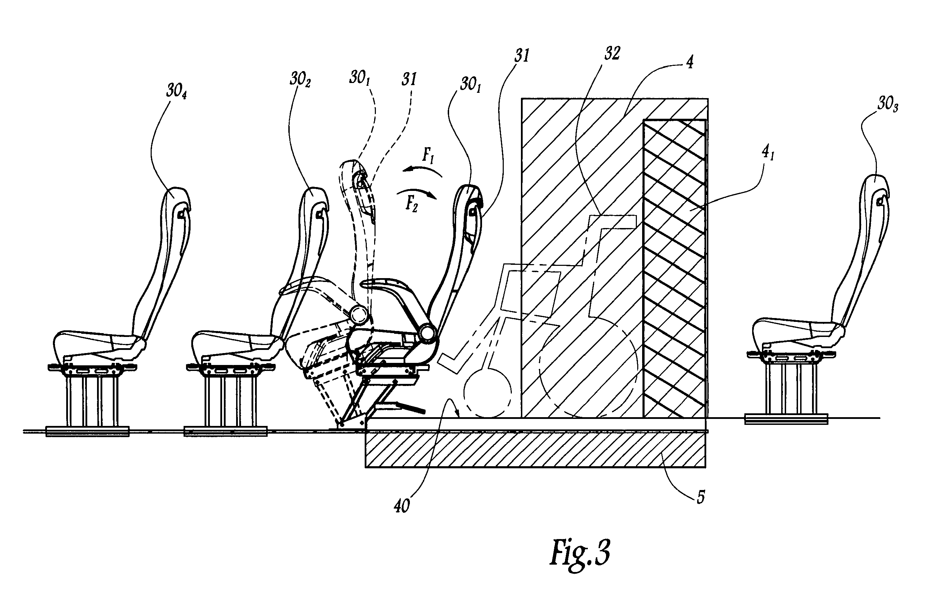

In figure 3, the two usage configurations of the transportation vehicle 1 are shown. A first bench 30₁ is arranged adjacent to the rear door 4. This bench 30₁ is placed between two benches 30₂ and 30₃, the bench 30₂ itself being arranged behind a bench 30₄.

In a first configuration in which a person with reduced mobility is not present in the vehicle, the bench 30₁ is in a so-called non-tilted position. In other words, an able-bodied person can be seated on this bench 30₁, illustrated in solid lines in figure 3.

In a second so-called reception configuration for a person with reduced mobility inside the vehicle 1, the bench 30₁, illustrated in broken lines in figure 3, is retracted toward the front of the vehicle, namely in the direction of the bench 30₂ and the compartment reserved for the driver. The tilting of the bench 30₁ is done along the arrow F₁. To do this, the handle 31 is used. Thus, a wheelchair 32 can be arranged in a placement zone 40 defined at the case 5 adjacent to the access door 4. This placement zone corresponds to a platform receiving the person with reduced mobility.

Advantageously, the placement zone 40 is defined by an area S₁ between 0.9 m² and 1.6 m², preferably between 1.2 m² and 1.4 m².

The access door 4 for a person with reduced mobility can also serve as emergency door. This allows the operator to do away with a central door, if it is not needed. Furthermore, access to the inside of the vehicle 1 via the rear door 4 is not done using access stairs. Thus, compliance with a standard in force requires the builder to include the presence of an emergency passage 4₁ with a width of 300 mm and not 450 mm, due to the absence of stairs. One may note the presence of this passage 4₁ behind the wheelchair 32. The wheelchair having to be arranged on the placement zone 40 such that access to the door 4 is not obstructed, one can therefore note a gain in space over a width of 150 mm. This thereby facilitates a significant installation of passengers in the vehicle 1. A width 1 defined by the door 4 is advantageously between 800 mm and 1,100 mm, preferably between 900 mm and 1,000 mm.

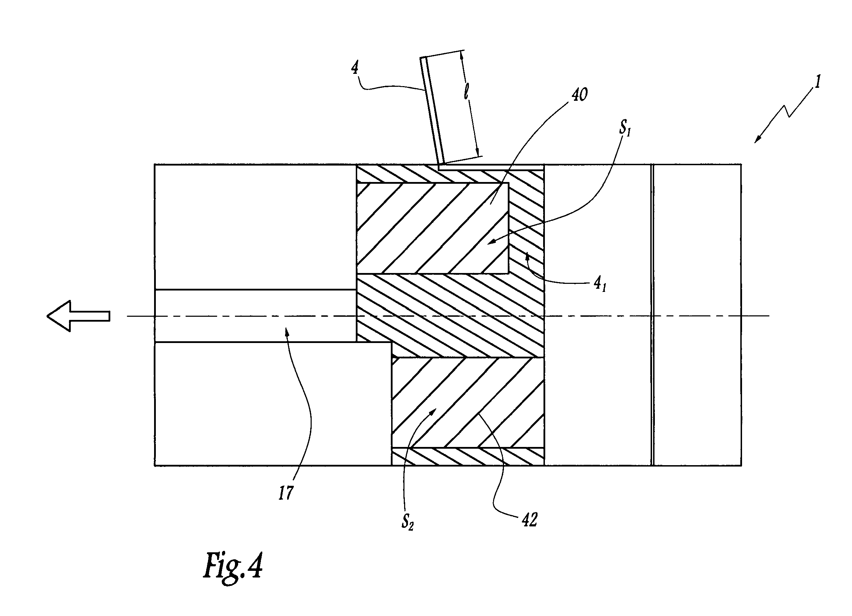

In figure 4 are illustrated the first placement zone 40 as well as a second placement zone 42 arranged symmetrically to the zone 40 relative to the aisle 17. The second placement zone 42 can, for example, make it possible to receive a second person with reduced mobility in the same transportation vehicle 1. The access ramp 18 is also used to transport the second person with reduced mobility from the curb to his reception location 42.

Advantageously, the placement zone 42 is defined by an area S₂ between 0.9 m² and 1.6 m², preferably between 1.2 m² and 1.4 m².

When a person with reduced mobility wishes to access the transportation vehicle 1, the vehicle immobilizes itself at a location provided for this purpose at the level of this person waiting on the curb. First, the bench 30₁ is tilted using the handle 31. The access door 4 opens. The rear access ramp 18 then comes out of its case 5 and bears on the ground, as illustrated in figure 2. The safety railings 22 deploy, either automatically or manually.

The person with reduced mobility then assumes a position on the base 20. The ramp 18 rises to the height of the aisle 17 and places itself adjacent to the placement zone 40, such that there is a junction between the base 20 and the zone 40. The person with reduced mobility can then move toward the placement zone 40 and place himself at the location provided in this zone. The person is then kept in this position using an inertia reel seat belt, not illustrated. The access ramp 18 then rehouses itself in the case 5. Lastly, one can close the door 4.

Once the person with reduced mobility arrives at their destination, the access door 4 opens and the access ramp 18 places itself at the height of the placement zone 40. The person with reduced mobility installs himself on the base 20. The access ramp 18 positions itself on the adjacent sidewalk. We then return to a maximum installation of passengers in the vehicle via simple tilting of the bench 30₁, using the handle 31, in the direction of the arrow F₂, toward the position defined by the first configuration.

If one wishes to receive two people with reduced mobility within the vehicle 1, one can begin by tilting the benches arranged, at the same time, on the placement zone 40 and the placement zone 42. In the same manner as above, one begins by installing the first person with reduced mobility on the zone 42, while maintaining the person in this position using an inertia reel seatbelt.

Subsequently, the access ramp 18 is again arranged on the ground so as to enable the second person with reduced mobility to assume a position on the base 20. Once the access ramp 18 is arranged at the level of the placement zone 40, the second person assumes a position on the zone 40 as previously described.

It should be noted that the access door 4 can be arranged from the side of the driver of the vehicle 1. Moreover, the number of access doors of the transportation vehicle 1 is not limited to two.

## Claims

1. A transportation vehicle (1), such as a bus or a coach, provided with access means for a person with reduced mobility, comprising:
- a plurality of benches (30, 30₁, 30₂, 30₃, 30₄) arranged on both sides of an interior central aisle (17) extending at least in part over the length of the vehicle,
- at least one first access door (2) arranged at the front of the vehicle and adjacent to the access stairs of the vehicle, and
- at least one second access door (4), arranged at the rear of the vehicle and adapted to allow accession to the vehicle for at least one person with reduced mobility, **characterized in that**:
- a first placement zone (40), adapted to receive a first person with reduced mobility, is arranged partially adjacent to a vehicle wall having the second access door (4), and partially adjacent to the second access door (4), and is arranged so as a remaining portion of the second access door (4) defines an emergency passage (4₁).

2. The transportation vehicle according to claim 1, **characterized in that** the first door (2), the second door (4) and the first placement zone (40) are arranged on the same side of the vehicle (1) in reference to the interior central aisle (17).

3. The transportation vehicle according to claim 1 or 2, **characterized in that** the first placement zone (40) receives at least one bench (30₁), adapted to tilt between a first configuration, in which the bench is in position to receive an able-bodied person, and a second configuration in which the bench is in the so-called retracted position, such that the first person with reduced mobility can be placed on the first placement zone (40).

4. The transportation vehicle according to one of the preceding claims, **characterized in that** the first placement zone (40) has a first area (S₁) between 0.9 m² and 1.6 m², preferably between 1.2 m² and 1.4 m².

5. The transportation vehicle according to any one of the preceding claims, **characterized in that** it comprises a lifting device (18), arranged adjacent to the second access door (4) and adapted to place the first person with reduced mobility on the first placement zone (40).

6. The transportation vehicle according to claim 5, **characterized in that** the lifting device (18) is adapted to have a retracted position, in which it is fitted under the first placement zone (40).

7. The transportation vehicle according to any one of the preceding claims, **characterized in that** it comprises a second placement zone (42), adapted to receive a second person with reduced mobility and arranged substantially symmetrically to the first placement zone (40) relative to the central aisle (17).

8. The transportation vehicle according to claim 7, **characterized in that** the second placement zone (42) has an area (S₂) between 0.9 m² and 1.6 m², preferably between 1.2 m² and 1.4 m².

9. The transportation vehicle according to any one of the preceding claims, **characterized in that** it also comprises a frame mounted on a front axle and a rear axle, each of the axles respectively supporting two front wheels (6) and two rear wheels (8) and being arranged between the first and second access doors (2, 4).

10. The transportation vehicle according to any one of the preceding claims, **characterized in that** the first and/or the second placement zone (40, 42) comprises a device for maintaining the seat of the first and/or the second person with reduced mobility.

11. The transportation vehicle according to claim 10, **characterized in that** the maintenance device comprises inertia reel seatbelts.

12. The transportation vehicle according to any one of the preceding claims, **characterized in that** the second access door (4) has a width (1) between 800 mm and 1,100 mm, preferably between 900 mm and 1,000 mm, such that this door is adapted to serve as an emergency door.

13. The transportation vehicle according to claim 12, **characterized in that** said first placement zone (40) is positioned partially adjacent to the second access door (4) so as the second access door comprises an emergency passage (4₁) with a width of 300 mm, when the person with reduced mobility occupies said first placement zone (40).

14. The transportation vehicle according to any one of the preceding claims, **characterized in that** it comprises only two access doors (2, 4).

15. The transportation vehicle according to any one of the preceding claims, **characterized in that** the central interior aisle (17) is located at a so-called floor height (H), the vehicle being in the in-use position, between 300 mm and 2,000 mm, preferably between 400 mm and 1,700 mm.

## Patentansprüche

1. Beförderungsfahrzeug (1), wie beispielsweise ein Autobus oder ein Reisebus, versehen mit einem Zugangsmittel für eine Person mit eingeschränkter Mobilität, umfassend:
mehrere Bänke (30, 30₁, 30₂, 30₃, 30₄), die an beiden Seiten eines inneren zentralen Gangs (17) angeordnet sind, der sich zumindest teilweise über die Länge des Fahrzeugs erstreckt,
mindestens eine erste Zugangstür (2), die an der Vorderseite des Fahrzeugs und benachbart zu den Zugangsstufen des Fahrzeugs angeordnet ist, und
mindestens eine zweite Zugangstür (4), die an der Hinterseite des Fahrzeugs angeordnet ist und geeignet ist, um einen Zugang zu dem Fahrzeug für mindestens eine Person mit eingeschränkter Mobilität zu ermöglichen,
**dadurch gekennzeichnet, dass** eine erste Unterbringungszone (40), die geeignet ist, um eine erste Person mit eingeschränkter Mobilität aufzunehmen, teilweise benachbart zu einer Fahrzeugwand mit der zweiten Zugangstür (4) und teilweise benachbart zu der zweiten Zugangstür (4) angeordnet ist und derart angeordnet ist, dass ein verbleibender Abschnitt der zweiten Zugangstür (4) einen Fluchtweg (4₁) definiert.

2. Beförderungsfahrzeug nach Anspruch 1,
**dadurch gekennzeichnet, dass** die erste Tür (2), die zweite Tür (4) und die erste Unterbringungszone (40) in Bezug auf den inneren zentralen Gang (17) auf der gleichen Seite des Fahrzeugs (1) angeordnet sind.

3. Beförderungsfahrzeug nach Anspruch 1 oder 2,
**dadurch gekennzeichnet, dass** die erste Unterbringungszone (40) mindestens eine Bank (30₁) aufnimmt, die geeignet ist, um zwischen einer ersten Ausgestaltung, in der sich die Bank in einer Position befindet, um eine gesunde Person aufzunehmen, und einer zweiten Ausgestaltung, in der sich die Bank in der sogenannten eingeklappten Position befindet, sodass die erste Person mit eingeschränkter Mobilität in der ersten Unterbringungszone (40) untergebracht werden kann, zu schwenken.

4. Beförderungsfahrzeug nach einem der vorstehenden Ansprüche, **dadurch gekennzeichnet, dass** die erste Unterbringungszone (40) einen ersten Bereich (S₁) zwischen 0,9 m² und 1,6 m², vorzugsweise zwischen 1,2 m² und 1,4 m², aufweist.

5. Beförderungsfahrzeug nach einem der vorstehenden Ansprüche, **dadurch gekennzeichnet, dass** es eine Hubeinrichtung (18) umfasst, die benachbart zu der zweiten Zugangstür (4) angeordnet ist und geeignet ist, um die erste Person mit eingeschränkter Mobilität in der ersten Unterbringungszone (40) unterzubringen.

6. Beförderungsfahrzeug nach Anspruch 5,
**dadurch gekennzeichnet, dass** die Hubeinrichtung (18) geeignet ist, um eine eingeklappte Position aufzuweisen, in der sie unter der ersten Unterbringungszone (40) installiert ist.

7. Beförderungsfahrzeug nach einem der vorstehenden Ansprüche, **dadurch gekennzeichnet, dass** es eine zweite Unterbringungszone (42) umfasst, die geeignet ist, um eine zweite Person mit eingeschränkter Mobilität aufzunehmen und im Wesentlichen symmetrisch zu der ersten Unterbringungszone (40) relativ zu dem zentralen Gang (17) angeordnet ist.

8. Beförderungsfahrzeug nach Anspruch 7,
**dadurch gekennzeichnet, dass** die zweite Unterbringungszone (42) einen Bereich (S₂) zwischen 0,9 m² und 1,6 m², vorzugsweise zwischen 1,2 m² und 1,4 m², aufweist.

9. Beförderungsfahrzeug nach einem der vorstehenden Ansprüche, **dadurch gekennzeichnet, dass** es auch einen Rahmen umfasst, der an einer Vorderachse und einer Hinterachse befestigt ist, wobei jede der Achsen zwei Vorderräder (6) bzw. zwei Hinterräder (8) trägt und zwischen der ersten und der zweiten Zugangstür (2, 4) angeordnet ist.

10. Beförderungsfahrzeug nach einem der vorstehenden Ansprüche, **dadurch gekennzeichnet, dass** die erste und/oder die zweite Unterbringungszone (40, 42) eine Einrichtung zum Halten des Sitzes der ersten und/oder der zweiten Person mit eingeschränkter Mobilität umfasst.

11. Beförderungsfahrzeug nach Anspruch 10,
**dadurch gekennzeichnet, dass** die Halteeinrichtung Aufrollautomatiksicherheitsgurte umfasst.

12. Beförderungsfahrzeug nach einem der vorstehenden Ansprüche, **dadurch gekennzeichnet, dass** die zweite Zugangstür (4) eine Breite (1) zwischen 800 mm und 1100 mm, vorzugsweise zwischen 900 mm und 1000 mm, aufweist, sodass diese Tür geeignet ist, um als Nottür zu dienen.

13. Beförderungsfahrzeug nach Anspruch 12,
**dadurch gekennzeichnet, dass** die erste Unterbringungszone (40) teilweise benachbart zu der zweiten Zugangstür (4) positioniert ist, sodass die zweite Zugangstür einen Fluchtweg (4₁) mit einer Breite von 300 mm umfasst, wenn die Person mit eingeschränkter Mobilität die erste Unterbringungszone (40) belegt.

14. Beförderungsfahrzeug nach einem der vorstehenden Ansprüche, **dadurch gekennzeichnet, dass** es nur zwei Zugangstüren (2, 4) umfasst.

15. Beförderungsfahrzeug nach einem der vorstehenden Ansprüche, **dadurch gekennzeichnet, dass** sich der zentrale innere Gang (17) auf einer sogenannten Bodenhöhe (H), wenn sich das Fahrzeug im Verkehr befindet, zwischen 300 mm und 2000 mm, vorzugsweise zwischen 400 mm und 1700 mm, befindet.

## Revendications

1. Véhicule de transport (1), tel qu'un bus ou un autocar, équipé d'un moyen d'accès pour une personne à mobilité réduite, comprenant :
- une pluralité de bancs (30, 30₁, 30₂, 30₃, 30₄) agencés des deux côtés d'une allée centrale intérieure (17) s'étendant au moins en partie sur la longueur du véhicule,
- au moins une première porte d'accès (2) agencée à l'avant du véhicule et adjacente aux marches d'accès du véhicule, et
- au moins une seconde porte d'accès (4), agencée à l'arrière du véhicule et adaptée pour permettre l'accès au véhicule à au moins une personne à mobilité réduite,
**caractérisé en ce que** :
- une première zone de placement (40), adaptée pour recevoir une première personne à mobilité réduite, est agencée partiellement adjacente à une paroi de véhicule comportant la seconde porte d'accès (4), et partiellement adjacente à la seconde porte d'accès (4), et est agencée de sorte qu'une partie restante de la seconde porte d'accès (4) définit un passage de secours (4₁).

2. Véhicule de transport selon la revendication 1, **caractérisé en ce que** la première porte (2), la seconde porte (4) et la première zone de placement (40) sont agencées du même côté du véhicule (1) par rapport à l'allée centrale intérieure (17).

3. Véhicule de transport selon la revendication 1 ou 2, **caractérisé en ce que** la première zone de placement (40) reçoit au moins un banc (30₁), adapté pour s'incliner entre une première configuration, dans laquelle le banc est dans une position pour recevoir une personne valide, et une seconde configuration dans laquelle le banc est dans la position dite rétractée, de telle sorte que la première personne à mobilité réduite peut être placée sur la première zone de placement (40).

4. Véhicule de transport selon l'une des revendications précédentes, **caractérisé en ce que** la première zone de placement (40) a une première superficie (S₁) comprise entre 0,9 m² et 1,6 m², de préférence entre 1,2 m² et 1,4 m².

5. Véhicule de transport selon l'une quelconque des revendications précédentes, **caractérisé en ce qu'**il comprend un dispositif de levage (18), agencé adjacent à la seconde porte d'accès (4) et adapté pour placer la première personne à mobilité réduite sur la première zone de placement (40).

6. Véhicule de transport selon la revendication 5, **caractérisé en ce que** le dispositif de levage (18) est adapté pour avoir une position rétractée, dans laquelle il est ajusté sous la première zone de placement (40).

7. Véhicule de transport selon l'une quelconque des revendications précédentes, **caractérisé en ce qu'**il comprend une seconde zone de placement (42), adaptée pour recevoir une seconde personne à mobilité réduite et agencée de manière sensiblement symétrique à la première zone de placement (40) par rapport à l'allée centrale (17).

8. Véhicule de transport selon la revendication 7, **caractérisé en ce que** la seconde zone de placement (42) a une superficie (S₂) comprise entre 0,9 m² et 1,6 m², de préférence entre 1,2 m² et 1,4 m².

9. Véhicule de transport selon l'une quelconque des revendications précédentes, **caractérisé en ce qu'**il comprend également un cadre monté sur un essieu avant et un essieu arrière, chacun des essieux supportant respectivement deux roues avant (6) et deux roues arrière (8) et étant agencés entre les première et seconde portes d'accès (2, 4).

10. Véhicule de transport selon l'une quelconque des revendications précédentes, **caractérisé en ce que** la première et/ou la seconde zone de placement (40, 42) comprennent un dispositif pour maintenir le siège de la première et/ou de la seconde personne à mobilité réduite.

11. Véhicule de transport selon la revendication 10, **caractérisé en ce que** le dispositif de maintien comprend des ceintures de sécurité à enrouleur à inertie.

12. Véhicule de transport selon l'une quelconque des revendications précédentes, **caractérisé en ce que** la seconde porte d'accès (4) a une largeur (1) comprise entre 800 mm et 1 100 mm, de préférence comprise entre 900 mm et 1 000 mm, de telle sorte que cette porte soit adaptée pour servir de porte de secours.

13. Véhicule de transport selon la revendication 12, **caractérisé en ce que** ladite première zone de placement (40) est positionnée partiellement adjacente à la seconde porte d'accès (4) de sorte que la seconde porte d'accès comprend un passage de secours (4₁) avec une largeur de 300 mm, lorsque la personne à mobilité réduite occupe ladite première zone de placement (40).

14. Véhicule de transport selon l'une quelconque des revendications précédentes, **caractérisé en ce qu'**il ne comprend que deux portes d'accès (2, 4).

15. Véhicule de transport selon l'une quelconque des revendications précédentes, **caractérisé en ce que** l'allée intérieure centrale (17) est située à une hauteur dite au sol (H), le véhicule étant dans la position en utilisation, comprise entre 300 mm et 2 000 mm, de préférence comprise entre 400 mm et 1 700 mm.
